# EUROPEAN PATENT APPLICATION

(11) **EP 4 300 649 A1**
(43) Date of publication of application: **03.01.2024**
(21) Application number: 22783784.6
(22) Date of filing: 28.01.2022
(51) Int. Cl.: H01M 10/052, H01M 10/0525, H01M 10/0587

(54) **BATTERY CELL, BATTERY, ELECTRICAL DEVICE AND METHOD FOR MANUFACTURING BATTERY CELL**

(30) Priority: 08.04.2021 CN 202110376782
(71) Applicant: Jiangsu Contemporary Amperex Technology Limited, Liyang, Jiangsu 213300 (CN)
(72) Inventor: YANG, Yanchao, hangzhou, Jiangsu 213300 (CN); TANG, Daichun, hangzhou, Jiangsu 213300 (CN); SHANGGUAN, Huihui, hangzhou, Jiangsu 213300 (CN); YANG, Qingya, hangzhou, Jiangsu 213300 (CN)
(74) Representative: Rowlands, Stuart Michael
(86) International application number: PCT/CN2022/074767
(87) International publication number: WO 2022/213713

(57) **Abstract**

The present application provides a battery cell, a battery, an electrical device, and a method for manufacturing a battery cell, and relates to the technical field of batteries. The battery cell comprises an electrode assembly. The electrode assembly comprises a first pole piece, a first diaphragm, a second pole piece, and a second diaphragm. The electrode assembly is laminated and wound by the first pole piece, the first diaphragm, the second pole piece and the second diaphragm. The first diaphragm comprises a first closeout section, and the second diaphragm comprises a second closeout section. The first closeout section is configured to be fixed to the surface of the first diaphragm or the surface of the second diaphragm. The second closeout section is configured to be fixed to the surface of the first diaphragm or the surface of the second diaphragm. When the first closeout section of the first diaphragm and the second closeout section of the second diaphragm are both fixed, the first closeout section and the second closeout section do not move relative to each other when a thermal piezoelectric electrode assembly or the electrode assembly expands, the first diaphragm and the second diaphragm do not generate wrinkles, such that the electrode assembly is prevented from being damaged due to uneven stress of the diaphragm, resulting in lithium precipitation.

## Description

### CROSS-REFERENCE TO RELATED APPLICATIONS

This application claims priority to Chinese Patent Application No. 202110376782.9, filed on April 08, 2021 and entitled "BATTERY CELL, BATTERY, ELECTRIC DEVICE, AND MANUFACTURING METHOD OF BATTERY CELL", which is incorporated herein by reference in its entirety.

### TECHNICAL FIELD

This application relates to the field of battery technologies, and specifically, to a battery cell, a battery, an electric device, and a manufacturing method of battery cell.

### BACKGROUND

Lithium-ion battery has become a mainstream product of secondary batteries due to its outstanding advantages such as high energy density and good cycling performance, and has been widely used in fields such as portable electrical appliances, motor-powered vehicles, mobile phones, and spacecraft. Most of electrode assemblies of lithium batteries are wound electrode assemblies. If a wound electrode assembly is not firmly fixed when being terminated at the end of winding, the electrode assembly is prone to wrinkling and an electrode plate will be unevenly stressed during hot pressing or thermal swelling, leading to damage to the electrode plate or causing a problem of lithium precipitation.

### SUMMARY

Some embodiments of this application provide a battery cell, a battery, an electric device, and a manufacturing method of battery cell, so as to more firmly fix a cell separator terminated at the end to avoid lithium precipitation caused by separator wrinkling.

According to a first aspect, an embodiment of this application provides a battery cell, including an electrode assembly. The electrode assembly includes a first electrode plate, a first separator, a second electrode plate, and a second separator. The electrode assembly is formed by stacking and winding the first electrode plate, the first separator, the second electrode plate, and the second separator. The first separator includes a first tail section, and the second separator includes a second tail section, where the first tail section is configured to be fixed to a surface of the first separator or a surface of the second separator, and the second tail section is configured to be fixed to a surface of the first separator or a surface of the second separator.

In the foregoing technical solution, both the first tail section of the first separator and the second tail section of the second separator are fixed, so that the first tail section and the second tail section are not displaced relative to each other when the electrode assembly is hot-pressed or swells. In this way, the first separator and the second separator do not wrinkle, thereby avoiding lithium precipitation caused by uneven stress on the electrode plates due to a wrinkled separator in the electrode assembly.

In some embodiments of the first aspect of this application, the second tail section is located outward of the first tail section, a first adhesive layer is provided on an inner side of the first tail section, and the first tail section is configured to be bonded to the second separator by using the first adhesive layer.

In the foregoing technical solution, a fastener for fixing the first tail section is the first adhesive layer. The first adhesive layer is used to bond the first tail section to the second separator in order to fix the first tail section. Implementation of bonding and fixing the first tail section by using the first adhesive layer with a relatively small thickness can reduce the effect of the thickness of the fastener for fixing the first tail section on the overall size of the electrode assembly and improve energy density of the battery cell.

In some embodiments of the first aspect of this application, the electrode assembly includes a flat region and two bending regions respectively connected to two ends of the flat region, and two ends of the first adhesive layer in a winding direction are located at the bending region.

In the foregoing technical solution, the two ends of the first adhesive layer in the winding direction are both located at the bending region, so that the first adhesive layer has no effect on flatness of the flat region, and the first adhesive layer causes no problem of indentation and wrinkling of the first electrode plate.

In some embodiments of the first aspect of this application, the two ends of the first adhesive layer in a winding direction are respectively located at two bending regions.

In the foregoing technical solution, the two ends of the first adhesive layer in a winding direction are respectively located at two bending regions. In this way, the first adhesive layer passes through the flat region at least once, so that the first adhesive layer has a sufficient length to ensure adhesive performance of the first tail section, allowing the first tail section to be fixed more firmly.

In some embodiments of the first aspect of this application, the first electrode plate is a negative electrode plate and the second electrode plate is a positive electrode plate; and in a width direction of the first electrode plate, the two ends of the first adhesive layer exceed two ends of the first electrode plate or the two ends of the first adhesive layer are flush with the two ends of the first electrode plate.

The separator is a very thin flexible part. With the first adhesive layer being applied on a surface of the separator, surface tension of the separator may change, resulting that two ends of the separator in a width direction are wound up toward the middle in the width direction, so that the separator is reduced in width and cannot play a role of separation between the first electrode plate and the second electrode plate, causing an internal short circuit of the battery cell. In the foregoing technical solution, in the width direction of the first electrode plate, the two ends of the first adhesive layer exceed the two ends of the first electrode plate or the two ends of the first adhesive layer are flush with the two ends of the first electrode plate, so that an internal short circuit of the battery cell due to the fact that the first separator becomes smaller in width after being wound up at two ends in the width direction and cannot play a role of separation between the first electrode plate and the second electrode plate can be avoided.

In some embodiments of the first aspect of this application, in the width direction of the first electrode plate, the two ends of the first adhesive layer exceed the two ends of the first electrode plate, and part of the first adhesive layer beyond the first electrode plate is bonded to the second separator.

In the foregoing technical solution, in the width direction of the first electrode plate, the part of the first adhesive layer beyond the first electrode plate is bonded to the second separator, further improving fixation stability of the first tail section and providing a more compact connection between the first tail section and the separator inward of the first tail section.

In some embodiments of the first aspect of this application, the second tail section is located outward of the first tail section, a second adhesive layer is provided on an inner side of the second tail section, and the second tail section is configured to be bonded to the first separator by using the second adhesive layer.

In the foregoing technical solution, a fastener for fixing the second tail section is the second adhesive layer. The second adhesive layer is used to bond the second tail section to the first separator in order to fix the second tail section. Implementation of bonding and fixing the second tail section by using the second adhesive layer with a relatively small thickness can reduce the effect of the thickness of the fastener for fixing the second tail section on overall size of the electrode assembly and improve energy density of the battery cell.

In some embodiments of the first aspect of this application, an outermost-layer electrode plate of the electrode assembly is the first electrode plate, and a winding tail section of the first electrode plate is configured to be fixed to the first separator or the second separator.

In the foregoing technical solution, the winding tail section of the outermost-layer electrode plate of the electrode assembly is fixed to the separator, and this can avoid lithium precipitation due to excessive increase in distance between the first electrode plate and the second electrode plate when the electrode assembly swells.

In some embodiments of the first aspect of this application, a third adhesive layer is provided on an inner side of the winding tail section of the first electrode plate, and the winding tail section of the first electrode plate is configured to be bonded to the first separator by using the third adhesive layer; and/or a third adhesive layer is provided on an outer side of the winding tail section of the first electrode plate, and the winding tail section of the first electrode plate is configured to be bonded to the second separator by using the third adhesive layer.

In the foregoing technical solution, a fastener for fixing the winding tail section of the first electrode plate is the third adhesive layer. Implementation of bonding and fixing the winding tail section of the first electrode plate by using the third adhesive layer with a relatively small thickness can reduce the effect of the fastener for fixing the winding tail section of the first electrode plate on overall size of the electrode assembly and improve energy density of the battery cell.

In some embodiments of the first aspect of this application, the electrode assembly includes a flat region and two bending regions respectively connected to two ends of the flat region, and both a finishing end of the first tail section and a finishing end of the second tail section are located at the bending region.

In the foregoing technical solution, both the finishing end of the first tail section and the finishing end of the second tail section are located at the bending region, so that the finishing end of the first tail section and the finishing end of the second tail section do not cause unevenness in the flat region of the electrode assembly, avoiding occurrence of indentation and wrinkling of the first electrode plate in the flat region caused by stress concentration during hot pressing or swelling.

In some embodiments of the first aspect of this application, an outermost-layer electrode plate of the electrode assembly is the first electrode plate, the first electrode plate is configured to be terminated at the bending region, and the first tail section and the second tail section exceed the winding tail section of the first electrode plate and are terminated after passing through the flat region at least once.

In the foregoing technical solution, the outermost-layer electrode plate is the first electrode plate, the first electrode plate is terminated at the bending region, and the finishing end of the first electrode plate does not cause unevenness in the flat region of the electrode assembly, avoiding occurrence of indentation and wrinkling of the first electrode plate in the flat region caused by stress concentration during hot pressing or swelling. The first tail section and the second tail section exceed the winding tail section of the first electrode plate and are terminated after passing through the flat region at least once, and this can ensure that the first tail section and the second tail section have sufficient binding force on the electrode assembly to guarantee structure stability of the electrode assembly.

According to a second aspect, an embodiment of this application provides a battery, including the battery cell according to any one of the embodiments of the first aspect.

In the foregoing technical solution, both a first tail section of a first separator and a second tail section of a second separator in an electrode assembly of the battery are fixed, so that the first tail section and the second tail section are not displaced relative to each other when the electrode assembly swells during use of the battery. In this way, the first separator and the second separator do not wrinkle, thereby avoiding lithium precipitation caused by uneven stress on the electrode plates due to a wrinkled separator in the electrode assembly and helping improve safety performance of the battery.

According to a third aspect, an embodiment of this application provides an electric device, including the battery cell according to any one of the embodiments of the first aspect.

In the foregoing technical solution, both a first tail section of a first separator and a second tail section of a second separator in an electrode assembly of a battery cell of the electric device are fixed, so that the first tail section and the second tail section are not displaced relative to each other when the electrode assembly swells during use of the battery cell. In this way, the first separator and the second separator do not wrinkle, thereby avoiding lithium precipitation caused by uneven stress on the electrode plates due to a wrinkled separator in the electrode assembly and helping improve safety performance of the battery cell and electric device.

According to a fourth aspect, an embodiment of this application provides a manufacturing method of battery cell, including: stacking and winding a first electrode plate, a first separator including a first tail section, a second electrode plate, and a second separator including a second tail section, to form an electrode assembly; fixing the first tail section to a surface of the first separator or a surface of the second separator; and fixing the second tail section to a surface of the first separator or a surface of the second separator.

In the foregoing technical solution, both the first tail section of the first separator and the second tail section of the second separator are fixed, so that the first tail section and the second tail section are not displaced relative to each other when the electrode assembly thermally swells in a subsequent hot pressing process and during use of the battery cell. In this way, the first separator and the second separator do not wrinkle, thereby avoiding lithium precipitation caused by uneven stress on the electrode plates due to a wrinkled separator in the electrode assembly and helping improve safety performance of the battery cell.

In some embodiments of the fourth aspect of this application, the manufacturing method further includes: applying a first adhesive layer on the first tail section; applying a second adhesive layer on the second tail section; bonding the first tail section to the surface of the first separator or the surface of the second separator by using the first adhesive layer; and bonding the second tail section to the surface of the first separator or the surface of the second separator by using the second adhesive layer.

In the foregoing technical solution, the first tail section and the second tail section each are fixed by using the adhesive layer. Fixation of the first tail section and the second tail section by using a very thin layer applied can reduce the effect of the thicknesses of the first adhesive layer and the second adhesive layer on overall size of the electrode assembly.

### BRIEF DESCRIPTION OF DRAWINGS

In order to describe the technical solutions in the embodiments of this application more clearly, the following briefly describes the accompanying drawings required for describing the embodiments. It should be appreciated that, the accompanying drawings below only show some embodiments of this application, and thus should not be considered as a limitation to the scope. A person of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of an electrode assembly in which a finishing end of a separator is flush with a finishing end of an electrode plate according to some embodiments of this application;
FIG. 5 is a schematic structural diagram of an electrode assembly in which a second tail section is fixed by using an adhesive layer and a first tail section is fixed by using an adhesive tape according to some embodiments of this application;
FIG. 6 is a schematic structural diagram of an electrode assembly in which both a first tail section and a second tail section are fixed by using an adhesive tape according to some embodiments of this application;
FIG. 7 is a schematic structural diagram of an electrode assembly in which a finishing end of a separator exceeds a finishing end of an electrode plate according to some embodiments of this application;
FIG. 8 is a schematic structural diagram of an electrode assembly in which both a first tail section and a second tail section are fixed by using an adhesive layer according to some embodiments of this application;
FIG. 9 is a schematic structural diagram of an electrode assembly in which both a first tail section and a second tail section are fixed by using an adhesive tape according to some other embodiments of this application;
FIG. 10 is a schematic structural diagram of an electrode assembly in which both a first tail section and a second tail section are fixed by using an adhesive tape according to some still other embodiments of this application;
FIG. 11 is a schematic structural diagram of an electrode assembly in which both a first tail section and a second tail section are fixed by using an adhesive tape according to some yet other embodiments of this application;
FIG. 12 is a schematic structural diagram of an electrode assembly in which a first tail section is fixed by using an adhesive layer and a second tail section is fixed by using an adhesive tape according to some embodiments of this application;
FIG. 13 is a schematic structural diagram of an electrode assembly in which a first tail section is fixed by using an adhesive layer and a second tail section is fixed by using an adhesive tape according to some yet other embodiments of this application;
FIG. 14 is a schematic structural diagram of an electrode assembly in which a second tail section exceeds a second tail section according to some still other embodiments of this application;
FIG. 15 is a schematic structural diagram of an electrode assembly in which a first tail section is located outward of a second tail section according to some embodiments of this application;
FIG. 16 is a schematic structural diagram of an electrode assembly in which a first adhesive layer does not pass through a flat region and two ends of the first adhesive layer in a winding direction are located at a same bending region according to some embodiments of this application;
FIG. 17 is a schematic diagram of an electrode assembly in which a first adhesive layer passes through a flat region an even number of times and two ends of the first adhesive layer in a winding direction are located at a same bending region according to some embodiments of this application;
FIG. 18 is a schematic structural diagram of an electrode assembly in which a first adhesive layer passes through a flat region three times and two ends of the first adhesive layer in a winding direction are respectively located at two flat regions according to some embodiments of this application;
FIG. 19 is a schematic structural diagram of an electrode assembly in which a first adhesive layer passes through a flat region once and two ends of the first adhesive layer in a winding direction are respectively located at two flat regions according to some embodiments of this application;
FIG. 20 is a schematic structural diagram of an electrode assembly in which a third adhesive layer is provided on a surface of a second separator inward of a winding tail section of a first electrode plate according to some embodiments of this application;
FIG. 21 is a schematic structural diagram of an electrode assembly in which a third adhesive layer is provided on an outer side of a winding tail section of a first electrode plate and the third adhesive layer connects to a first adhesive layer according to some embodiments of this application;
FIG. 22 is a schematic structural diagram of an electrode assembly in which a third adhesive layer is provided on an outer side of a winding tail section of a first electrode plate and the third adhesive layer is disconnected from a first adhesive layer according to some embodiments of this application;
FIG. 23 is a schematic structural diagram of an electrode assembly in which a third adhesive layer is provided on both an inner side and an outer side of a winding tail section of a first electrode plate according to some embodiments of this application;
FIG. 24 is a schematic structural diagram of an electrode assembly in which a first electrode plate is a positive electrode plate and a second electrode plate is a negative electrode plate according to some embodiments of this application;
FIG. 25 is a flowchart of a manufacturing method of battery cell according to some embodiments of this application;
FIG. 26 is a flowchart of a manufacturing method of battery cell according to some other embodiments of this application;
FIG. 27 is a schematic structural diagram of a first electrode plate on which a first adhesive layer is non-successively applied according to some embodiments of this application;
FIG. 28 is a schematic structural diagram of a first electrode plate on which a first adhesive layer is non-successively applied according to some other embodiments of this application;
FIG. 29 is a schematic structural diagram of a first electrode plate on which a first adhesive layer is non-successively applied according to some still other embodiments of this application;
FIG. 30 is a schematic structural diagram of a first electrode plate on which a first adhesive layer is non-successively applied according to some yet other embodiments of this application;
FIG. 31 is a schematic structural diagram of a first electrode plate coated with a first adhesive layer according to some yet other embodiments of this application;
FIG. 32 is a schematic structural diagram of a first electrode plate in which a plurality of first adhesive portions are in a toothed arrangement according to some embodiments of this application; and
FIG. 33 is a schematic structural diagram of a first electrode plate on which a first adhesive layer is successively applied according to some embodiments of this application.

Reference sign: 1000. vehicle; 100. battery; 200. controller; 300. motor; 10. battery cell; 11. housing; 12. end cover assembly; 13. electrode assembly; 131. first electrode plate; 1311. first electrode plate starting section; 1312. first electrode plate tail section; 1313. finishing end of the first electrode plate tail section; 132. first separator; 1321. first tail section; 1322. finishing end of the first separator; 133. second electrode plate; 1331. second electrode plate starting section; 1332. second electrode plate tail section; 1333. finishing end of the second electrode plate tail section; 134. second separator; 1341. second tail section; 1342. finishing end of the second separator; 135. adhesive layer; 135a. first adhesive layer; 135a1. first adhesive portion; 135b. second adhesive layer; 136. adhesive tape; 136a. first adhesive tape; 136b. second adhesive tape; 137. third adhesive layer; 20. box; 21. first box body; 22. second box body; A. clockwise direction; B. counterclockwise direction; C. width direction; D. length direction; I. flat region; II. bending region.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. It will be apparent that the described embodiments are some but not all of the embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application belongs. The terms used in the specification of this application are merely intended to describe the specific embodiments but not intended to constitute any limitation on this application. The terms "include", "comprise", and any variations thereof in the specification and claims of this application and the foregoing description of the drawings are intended to cover non-exclusive inclusions. In the specification, claims, or accompanying drawings of this application, the terms "first", "second", and the like are intended to distinguish between different objects but do not indicate a particular order or a subordinate relationship.

An "embodiment" mentioned in this application means that specified features, structures, or characteristics described with reference to this embodiment may be included in at least one embodiment of this application. The word "embodiment" in various positions in the specification does not necessarily refer to a same embodiment, or an independent or alternative embodiment that is exclusive of other embodiments.

In the descriptions of this application, it should be noted that unless otherwise specified and defined explicitly, the terms "installment", "link", "connection", and "attachment" should be understood in their general senses. For example, the terms may be a fixed connection, a detachable connection, or an integrated connection, or may be a direct connection, an indirect connection through an intermediate medium, or an internal connection between two elements. A person of ordinary skill in the art can understand specific meanings of these terms in this application based on specific situations.

In the embodiments of this application, the same reference signs denote the same components. For brevity, in different embodiments, detailed descriptions of the same components are not repeated. It should be understood that, as shown in the accompanying drawings sizes such as thickness, length, and width of various components and sizes such as thickness, length, and width of integrated devices in the embodiments of this application are merely used as examples for description and should not constitute any limitation on this application.

In this application, "a plurality of" means more than two (inclusive).

In this application, the battery cell may include a lithium-ion secondary battery, a lithium-ion primary battery, a lithium-sulfur battery, a sodium-lithium-ion battery, a sodium-ion battery, a magnesium-ion battery, or the like, and this is not limited in the embodiments of this application. The battery cell may be cylindrical, cuboid, or of other shapes, and this is not limited in the embodiments of this application either. The battery cell is typically divided into three types by packaging method: cylindrical battery cell, prismatic battery cell, and pouch battery cell. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matters from affecting charging or discharging of the battery cells.

The battery cell includes an electrode assembly and an electrolyte. The electrode assembly includes a positive electrode plate, a negative electrode plate, and a separator. The battery cell mainly relies on movement of metal ions between a positive electrode plate and a negative electrode plate to work. The positive electrode plate includes a positive electrode current collector and a positive electrode active substance layer. The positive electrode active substance layer is applied on a surface of the positive electrode current collector. A positive electrode current collector uncoated with the positive electrode active substance layer bulges out of a positive electrode current collector coated with the positive electrode active substance layer, and the positive electrode current collector uncoated with the positive electrode active substance layer is used as a positive tab. In an example of a lithium-ion battery, the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A negative electrode current collector uncoated with the negative electrode active substance layer bulges out of a negative electrode current collector coated with the negative electrode active substance layer, and the negative electrode current collector uncoated with the negative electrode active substance layer is used as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of PP (polypropylene), PE (polyethylene), or the like.

Many design factors should be considered in the development of battery technologies, for example, energy density, cycle life, discharge capacity, charge-discharge rate, and other performance parameters. In addition, safety of the battery needs to be considered. Lithium precipitation is one of main factors affecting electrical performance and safety performance of the battery. Lithium precipitation not only reduces the electrical performance of the battery, but also is prone to forming dendrites with accumulation of amount of lithium precipitated. The dendrites may pierce the separator and cause a short circuit in the battery, causing a safety hazard.

The inventors have found that in the battery cell, two layers of separators are provided in the electrode assembly; after winding of the electrode assembly ends, the two layers of separators are terminated at the end; and a tail section of an outer separator is fixed by using an adhesive tape, and relying on constraint of the outer separator, a tail section of an inner separator is sandwiched between the separators, thereby ensuring that the electrode assembly forms a wound structure. However, the tail section of the inner separator is not fixed with an adhesive tape and prone to movement. During the movement, the inner separator wrinkles. When the electrode assembly is hot-pressed or when the battery cell is heated and swells, the wrinkled inner separator causes uneven stress on the electrode plate, resulting in damage to the electrode plate or a problem of lithium precipitation.

In view of this, an embodiment of this application provides a technical solution. In the solution, tail sections of two layers of separators are both fixed, to avoid a problem of lithium precipitation caused by wrinkling of any separator.

The technical solution described in the embodiment of this application is applicable to a battery and an electric device using the battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric vehicle toy, an electric ship toy, an electric airplane toy, and the like. The electric tool includes an electric metal cutting tool, an electric grinding tool, an electric assembly tool and an electric railway-specific tool, for example, an electric drill, an electric grinder, an electric wrench, an electric screwdriver, an electric hammer, an electric impact drill, a concrete vibrator, an electric planer, and the like. The embodiments of this application impose no special limitation on the foregoing electric device.

For ease of description, an example in which the electric device is a vehicle 1000 is used for description in the following embodiments.

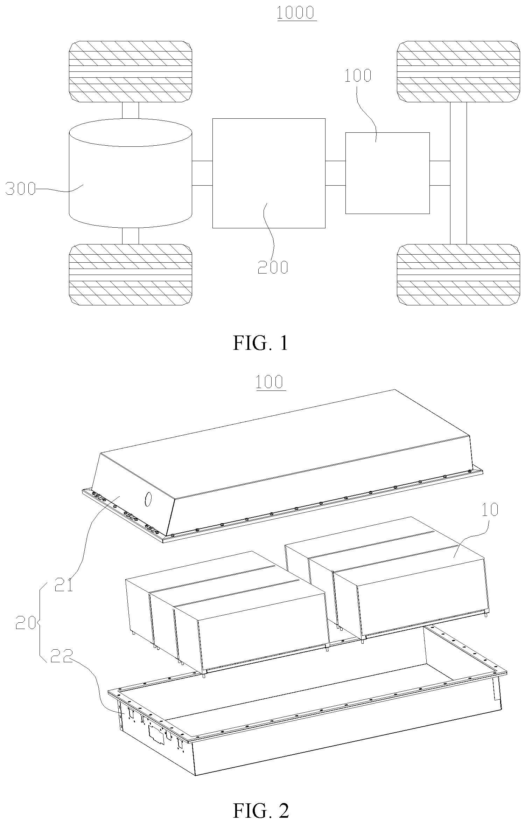

Referring to FIG. 1, FIG. 1 is a schematic structural diagram of the vehicle 1000 according to some embodiments of this application. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, and the controller 200 is configured to control the battery 100 to supply power to the motor 300, for example, to satisfy operating power needs during start, navigation, and traveling of the vehicle 1000.

In some embodiments of this application, the battery 100 can be used as not only the operational power supply for the vehicle 1000 but also a driving power supply for the vehicle 1000, replacing all or part of the fossil fuel or the natural gas to provide driving power for the vehicle 1000.

As shown in FIG. 2, the battery 100 includes a battery cell 10 (not shown in FIG. 1) and a box 20. The battery cell 10 is accommodated in the box 20, and the box 20 provides an accommodation space for the battery cell 10. The box 20 includes a first box body 21 and a second box body 22. The first box body 21 and the second box body 22 are configured to jointly define an accommodation space for accommodating the battery cell 10. There may be one or more battery cells 10 in the battery 100. If a plurality of battery cells 10 are present, the plurality of battery cells 10 may be connected in series, parallel, or series-parallel, and being connected in series-parallel means a combination of series-parallel connections of the plurality of battery cells 10. The plurality of battery cells 10 may be directly connected in series, parallel, or series-parallel, and a whole constituted by the plurality of battery cells 10 is accommodated in the box. Certainly, the plurality of battery cells 10 may first be connected in series, parallel, or series-parallel to constitute a battery module, and then a plurality of battery modules are connected in series, parallel, or series-parallel to constitute a whole, and accommodated in the box 20. The battery cell 10 may be cylindrical, flat, rectangular, or of other shapes.

In some embodiments, the battery 100 may further include a busbar (not shown in the figures). The plurality of battery cells 10 may be electrically connected via the busbar, so that the plurality of battery cells 10 are connected in series, parallel, or series-parallel.

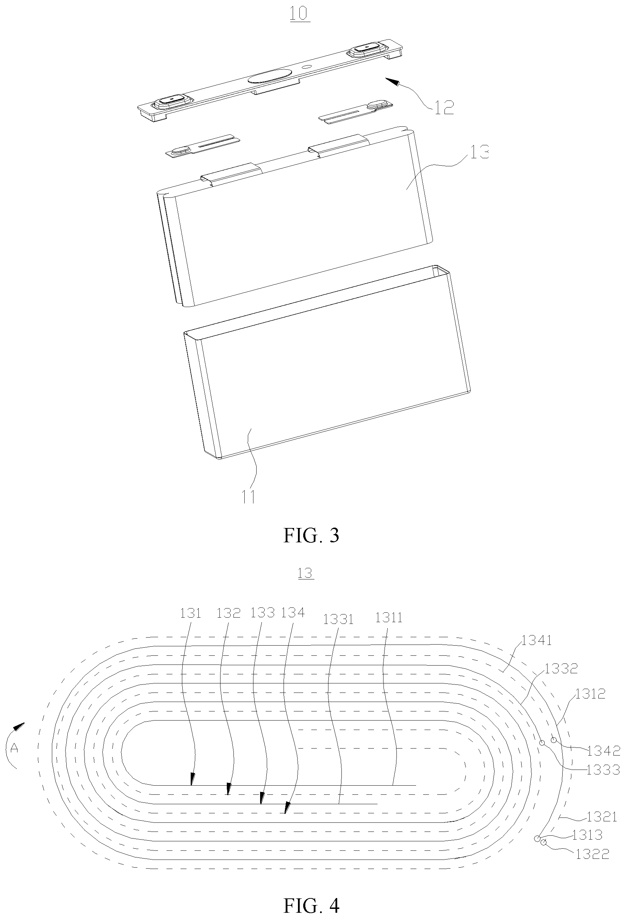

As shown in FIG. 3, FIG. 3 is an exploded view of a battery cell 10 according to some embodiments of this application. The battery cell 10 includes a housing 11, an end cover assembly 12, and an electrode assembly 13. The housing 11 has an opening, the electrode assembly 13 is accommodated in the housing 11, and the end cover assembly 12 is configured to cover the opening. The housing 11 may be of various shapes, for example, a cylinder, a cuboid, or the like. The shape of the housing 11 may be determined based on a specific shape of the electrode assembly 13. For example, if the electrode assembly 13 is a cylinder structure, the housing 11 may use a cylinder structure. If the electrode assembly 13 is an elliptic cylinder structure, the housing 11 may use a cuboid structure.

The housing 11 may be made of various materials, such as copper, iron, aluminum, stainless steel, and aluminum alloy, and the materials are not particularly limited in this embodiment of this application.

There may be one or more electrode assemblies 13 in the battery cell 10. FIG. 3 illustrates a battery cell 10 with a housing 11 of a cuboid shape and two electrode assemblies 13 of an elliptic cylinder structure. In FIG. 3, the two electrode assemblies 13 are arranged side by side.

As shown in FIG. 4, the electrode assembly 13 may include a first electrode plate 131, a first separator 132, a second electrode plate 133, and a second separator 134. The electrode assembly 13 is formed by stacking and winding the first electrode plate 131, the first separator 132, the second electrode plate 133, and the second separator 134. The first electrode plate 131, the first separator 132, the second electrode plate 133, and the second separator 134 are stacked and wound to form the electrode assembly 13. FIG. 4 shows an electrode assembly 13 of an elliptic cylinder structure. In some embodiments, the first electrode plate 131, the first separator 132, the second electrode plate 133, and the second separator 134 may alternatively be stacked and wound to form the electrode assembly 13 of a cylinder structure.

The polarities of the first electrode plate 131 and the second electrode plate 133 are opposite. In some embodiments, the first electrode plate 131 is a negative electrode plate, and the second electrode plate 133 is a positive electrode plate. In stacking, the second electrode plate 133 is sandwiched between the first separator 132 and the second separator 134, and the first separator 132 is sandwiched between the first electrode plate 131 and the second electrode plate 133. A winding direction is shown in FIG. 4 (the winding direction is a clockwise direction A in FIG. 4). After winding, an innermost-layer electrode plate is a first electrode plate 131, so that an inner side of an innermost-layer second electrode plate 133 is covered by the first electrode plate 131. An outermost-layer electrode plate is a first electrode plate 131, so that an outer side of an outermost-layer second electrode plate 133 is covered by the first electrode plate 131.

It should be noted that the inner and outer sides of the electrode plates (the first electrode plate 131 and the second electrode plate 133) are described relative to a winding central axis, a side of a first electrode plate 131 of any layer closer to the winding central axis is an inner side of the first electrode plate 131 of the layer, a side of a first electrode plate 131 of any layer farther away from the winding central axis is an outer side of the first electrode plate 131 of the layer, a side of a second electrode plate 133 of any layer closer to the winding central axis is an inner side of the second electrode plate 133 of the layer, and a side of a second electrode plate 133 of any layer farther away from the winding central axis is an outer side of the second electrode plate 133 of the layer.

The first electrode plate 131 includes a first electrode plate starting section 1311 and a first electrode plate tail section 1312, and the second electrode plate 133 includes a second electrode plate starting section 1331 and a second electrode plate tail section 1332. To ensure that the first electrode plate 131 covers the second electrode plate 133, the first electrode plate starting section 1311 of the first electrode plate 131 should exceed the second electrode plate starting section 1331 of the second electrode plate 133 in a direction opposite a winding direction (the clockwise direction A in FIG. 4), and the first electrode plate tail section 1312 of the first electrode plate 131 should exceed the second electrode plate tail section 1332 of the second electrode plate 133 in the winding direction (the clockwise direction A in FIG. 4).

In some embodiments, the first separator 132 includes the first tail section 1321, and the second separator 134 includes the second tail section 1341, where the first tail section 1321 is configured to be fixed to a surface of the first separator 132 or a surface of the second separator 134, and the second tail section 1341 is configured to be fixed to a surface of the first separator 132 or a surface of the second separator 134. Both the first tail section 1321 of the first separator 132 and the second tail section 1341 of the second separator 134 are fixed, so that the first tail section 1321 and the second tail section 1341 are not displaced relative to each other when the electrode assembly 13 is hot-pressed or swells. In this way, the first separator 132 and the second separator 134 do not wrinkle, so that lithium precipitation caused by uneven stress on the electrode plates due to a wrinkled separator in the electrode assembly 13 is avoided.

It should be noted that the surface of the first separator 132 refers to a surface having both a size in a width direction and a size in the winding direction, and the surface of the second separator 134 refers to a surface having both a size in a width direction and a size in the winding direction. The width direction involved in this application is consistent with a winding central axis direction of the electrode assembly 13, and a size in a length direction is a size in the winding direction of the electrode assembly 13.

Depending on different relative positional relationships between the first tail section 1321, the first electrode plate tail section 1312, the second tail section 1341, and the second electrode plate tail section 1332, the first tail section 1321 and the second tail section 1341 may be defined differently.

In some embodiments, with reference to FIG. 4, a first separator 132 and a first electrode plate 131 are wound the same number of turns, a second separator 134 and a second electrode plate 133 are wound the same number of turns, a finishing end 1322 of the first separator is flush with a finishing end 1313 of the first electrode plate tail section, and a finishing end 1342 of the second separator is flush with a finishing end 1333 of the second electrode plate tail section. The first separator 132 being wound for a distance from the finishing end 1322 of the first separator in a direction opposite to the winding direction is defined as a first tail section 1321, and the second separator 134 being wound for a distance from the finishing end 1342 of the second separator in the direction opposite to the winding direction is defined as a second tail section 1341.

It should be noted that, the finishing end 1322 of the first separator being flush with the finishing end 1313 of the first electrode plate tail section means that the first tail section 1321 of the first separator 132 does not exceed the first electrode plate tail section 1312 in a case that the first separator 132 completely covering the first electrode plate 131 in the winding direction is guaranteed; and the finishing end 1342 of the second separator being flush with the finishing end 1333 of the second electrode plate tail section means that the second tail section 1341 of the second separator 134 does not exceed the second electrode plate tail section 1332 in a case that the second separator 134 completely covering the second electrode plate 133 in the winding direction is guaranteed.

The first tail section 1321 and the second tail section 1341 may be fixed by an adhesive layer, an adhesive tape, hot melting, or in other manners. The adhesive layer refers to a structure obtained after a glue solidifies. The adhesive tape refers to a structure in which an adhesive is applied on at least one surface of a substrate, where the substrate may be made of polyvinyl chloride, polyethylene, polypropylene, polyethylene terephthalate, paper, or other materials.

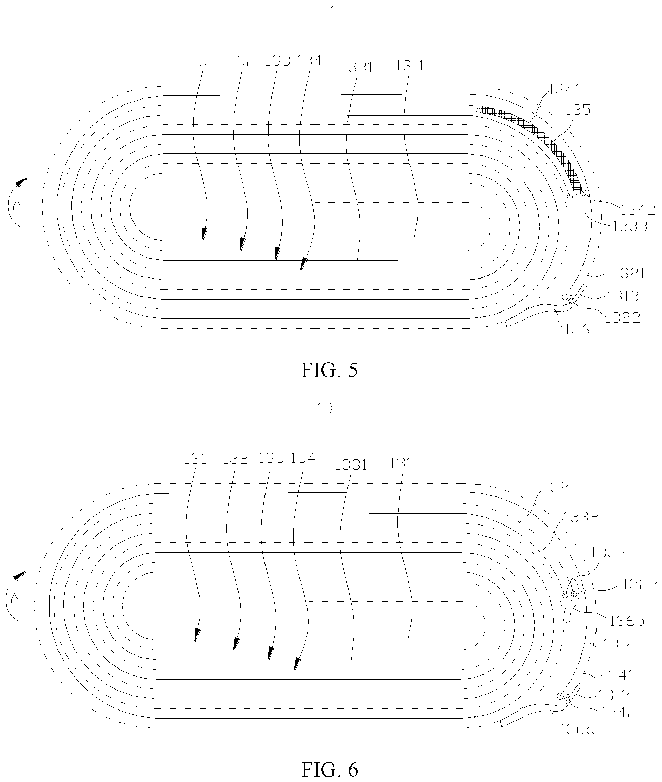

In some embodiments, as shown in FIG. 5, a first tail section 1321 is fixed to an outer surface of a first separator 132 inward of the first tail section 1321 by using an adhesive tape 136, and a second tail section 1341 may be fixed to an outer surface of a second electrode plate tail section 1332 by using an adhesive layer 135.

In some embodiments, as shown in FIG. 6, a first tail section 1321 is fixed to an outer surface of a first separator 132 inward of the first tail section 1321 by using a first adhesive tape 136a, and a second tail section 1341 is fixed to an outer surface of the first separator 132 inward of the second tail section 1341 by using a second adhesive tape 136b.

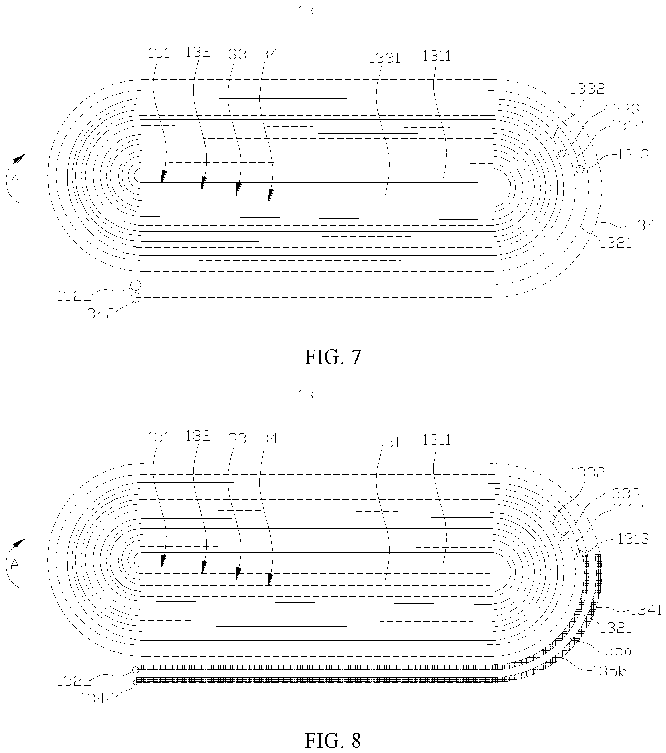

In some embodiments, as shown in FIG. 7, a finishing end 1322 of a first separator is flush with a finishing end 1313 of a first electrode plate tail section, and a finishing end 1342 of a second separator is flush with a finishing end 1333 of a second electrode plate tail section. A part of the first separator 132 exceeding the finishing end 1313 of the first electrode plate tail section in the winding direction is defined as the first tail section 1321, and a part of the second separator 134 exceeding the finishing end 1333 of the second electrode plate tail section in the winding direction is defined as the second tail section 1341.

In some embodiments, as shown in FIG. 8, a second tail section 1341 is located outward of a first tail section 1321. A first adhesive layer 135a is provided on an inner side of the first tail section 1321, and the first tail section 1321 is configured to be bonded to the second separator 134 by using the first adhesive layer 135a.

In some embodiments, the first adhesive layer 135a may be formed after a glue applied on the inner side of the first tail section 1321 solidifies. A fastener for fixing the first tail section 1321 is the first adhesive layer 135a. No substrate is provided in the first adhesive layer 135a. Implementation of bonding and fixing the first tail section 1321 by using the first adhesive layer 135a with a relatively small thickness can reduce the effect of the thickness of the fastener for fixing the first tail section 1321 on overall size of the electrode assembly 13 and improve energy density of the battery cell. In addition, compared with a substrate of an adhesive tape, the first adhesive layer 135a has a larger porosity, providing better infiltration of an electrolyte, so that lithium ions shuttle between the first electrode plate 131 and the second electrode plate 133 with low impedance and short time, helping improve rate performance, discharge capacity, and service life of the battery cell 10.

The first adhesive layer 135a may be formed on the outer surface of the second separator 134 inward of the first tail section 1321, or may be formed on the inner surface of the first tail section 1321. The first adhesive layer 135a may be provided on a part of the inner side of the first tail section 1321, or the first adhesive layer 135a is provided on the entire inner side of the first tail section 1321.

The first adhesive layer 135a may be one or more of instant glue, epoxy resin glue, anaerobic glue, UV (Ultraviolet Rays, ultraviolet light) glue, melt glue, pressure sensitive glue, and latex. A drying time of the first adhesive layer 135a is 20s-30s. When a glue is applied to a surface of the first tail section 1321 or a surface of the second separator 134, a shorter glue drying time gives better adhesive performance of the first tail section 1321. A melting point of the first adhesive layer 135a is 50°C-265°C, making the first adhesive layer 135a have relatively good temperature resistance and preventing the first adhesive layer 135a from melting after being heated and causing fixation of the first tail section 1321 to fail.

In some embodiments, still referring to FIG. 8, a second tail section 1341 is located outward of a first tail section 1321, a second adhesive layer 135b is provided on an inner side of the second tail section 1341, and the second tail section 1341 is configured to be bonded to a first separator 132 by using the second adhesive layer 135b.

In some embodiments, the second adhesive layer 135b may be formed after a glue applied on the inner side of the second tail section 1341 solidifies. A fastener for fixing the second tail section 1341 is the second adhesive layer 135b. No substrate is provided in the second adhesive layer 135b. Implementation of bonding and fixing the second tail section 1341 by using the second adhesive layer 135b with a relatively small thickness can reduce the effect of the thickness of the fastener for fixing the second tail section 1341 on overall size of the electrode assembly 13. In addition, compared with a substrate of an adhesive tape, the second adhesive layer 135b has a larger porosity, providing better infiltration of an electrolyte, so that lithium ions shuttle between the first electrode plate 131 and the second electrode plate 133 with low impedance and short time, helping improve rate performance, discharge capacity, and service life of the battery cell 10.

The second adhesive layer 135b may be formed on the outer surface of the first separator 132 inward of the second tail section 1341, or may be formed on the inner surface of the second tail section 1341.

The material and performance of the second adhesive layer 135b can refer to those of the first adhesive layer 135a, and details are not repeated herein.

Certainly, the first tail section 1321 and the second tail section 1341 may alternatively be fixed in other manners. In some embodiments, the first tail section 1321 and the second tail section 1341 are fixed by using an adhesive tape.

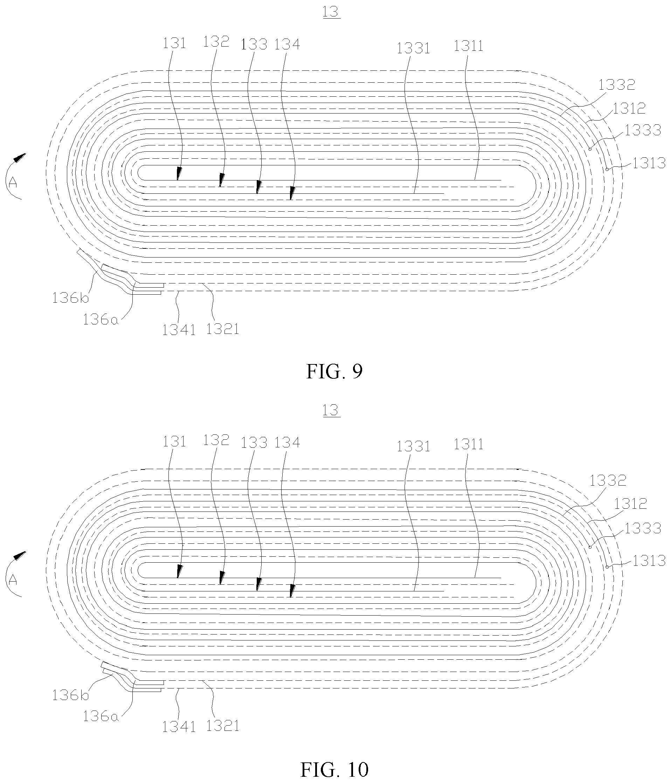

As shown in FIG. 9, a first tail section 1321 is fixed to a second separator 134 inward of the first tail section 1321 by using a first adhesive tape 136a, and a second tail section 1341 is fixed by using a second adhesive tape 136b. One end of the second adhesive tape 136b is bonded to an outer surface of the second tail section 1341, and the other end of the second adhesive tape 136b fixes the second tail section 1341 to the second separator 134 inward of the first tail section 1321 across the first adhesive tape 136a.

In some embodiments, as shown in FIG. 10, a first tail section 1321 is fixed to a second separator 134 inward of the first tail section 1321 by using a first adhesive tape 136a, and a second tail section 1341 is fixed by using a second adhesive tape 136b. One end of the second adhesive tape 136b is bonded to an outer surface of the second tail section 1341, and the other end of the second adhesive tape 136b is bonded to the first adhesive tape 136a to fix the second tail section 1341.

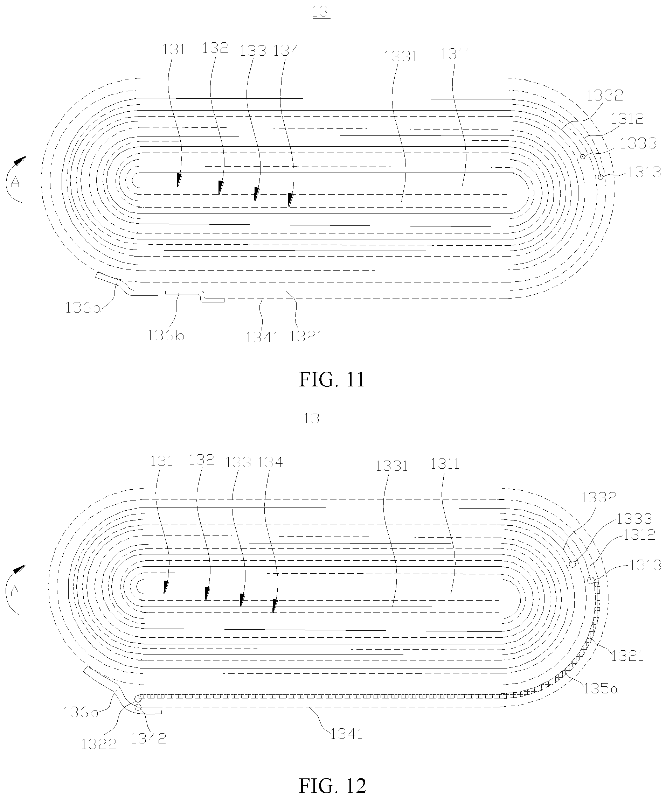

In some embodiments, as shown in FIG. 11, a first tail section 1321 is fixed to a second separator 134 inward of the first tail section 1321 by using a first adhesive tape 136a, and the second tail section 1341 is fixed by using a second adhesive tape 136b. One end of the second adhesive tape 136b is bonded to an outer surface of a second tail section 1341, and the other end of the second adhesive tape 136b is bonded to an outer surface of the first tail section 1321 to fix the second tail section 1341 to the outer surface of the first tail section 1321.

In some embodiments, as shown in FIG. 12, a first tail section 1321 is fixed to a surface of a second separator 134 inward of the first tail section 1321 by using a first adhesive layer 135a, and the second tail section 1341 is fixed to a surface of a second separator 134 inward of the first tail section 1321 by using a second adhesive tape 136b.

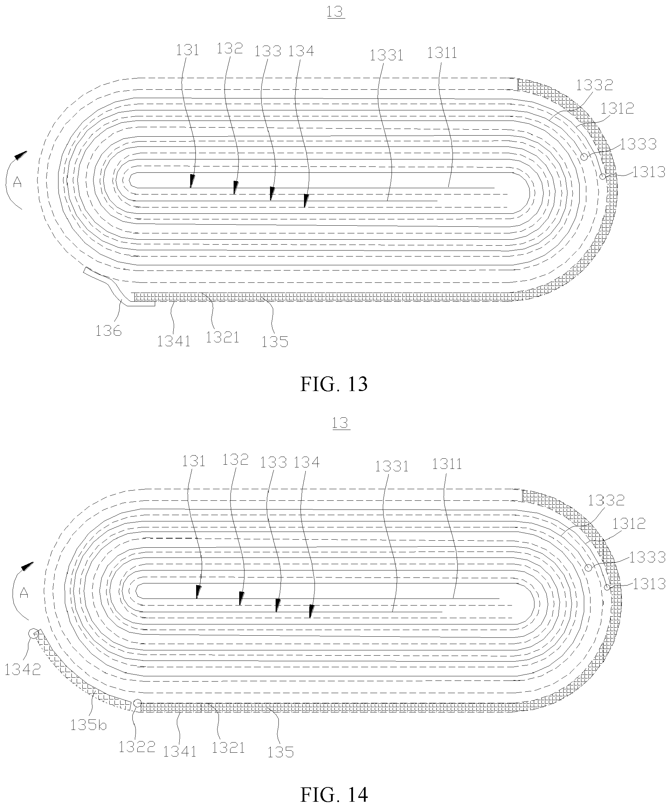

In some embodiments, as shown in FIG. 13, a first tail section 1321 may alternatively be fixed to an inner surface of a second tail section 1341 by using an adhesive layer 135, and then the second tail section 1341 fixing the first tail section 1321 is fixed to the first separator 132 or the second separator 134. The first tail section 1321 is fixed to an inner surface of the second tail section 1341. FIG. 13 shows that a second tail section 1341 is fixed to a surface of a second separator 134 inward of a first tail section 1321 by using an adhesive tape 136.

Certainly, in some embodiments, as shown in FIG. 14, a second tail section 1341 is more wound than a first tail section 1321, that is, in a winding direction, the second tail section 1341 exceeds the first tail section 1321, so that the second tail section 1341 may alternatively be fixed to a surface of the second separator 134 inward of the first tail section 1321 by using a second adhesive layer 135b. The first tail section 1321 is fixed to an inner surface of the second tail section 1341 by using the adhesive layer 135. Certainly, the second tail section 1341 may alternatively be fixed to a surface of the first separator 132 or a surface of the second separator 134 by using the adhesive tape.

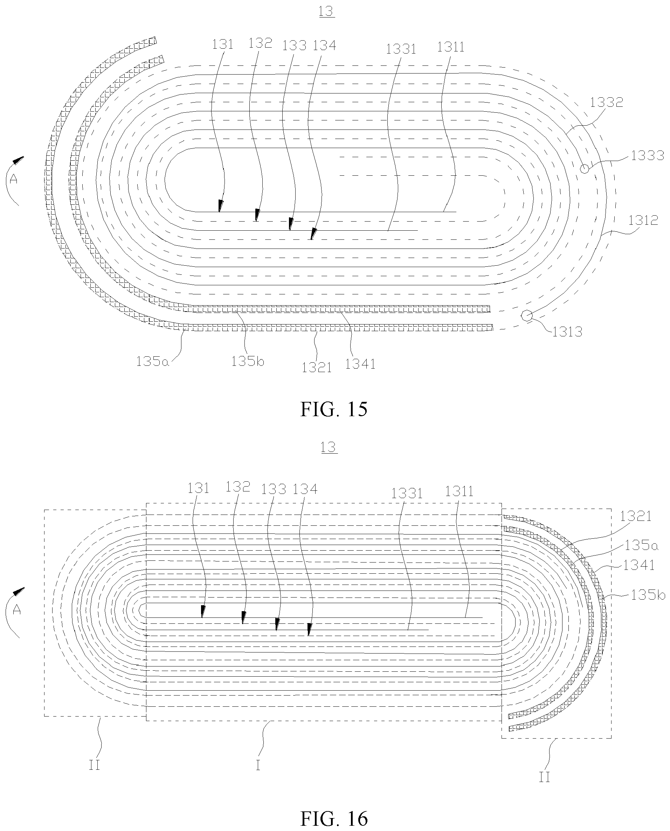

In some embodiments, as shown in FIG. 15, a first separator 132 and a second separator 134 may be wound different number of turns. The first separator 132 is wound one more turn with respect to the second separator 134 so that the first tail section 1321 is located outward of the second tail section 1341. The second tail section 1341 is fixed to a surface of the first separator 132 by using a second adhesive layer 135b, and the first tail section 1321 is fixed to a surface of the second tail section 1341 by using a first adhesive layer 135a.

Certainly, in some embodiments, when the first tail section 1321 is located outward of the second tail section 1341, the first tail section 1321 may alternatively be fixed to a surface of the first separator 132 or a surface of the second separator 134 by using an adhesive tape, and the second tail section 1341 may also be fixed to a surface of the first separator 132 or a surface of the second separator 134 by using an adhesive tape.

In some embodiments, as shown in FIG. 16 to FIG. 19, an electrode assembly 13 formed by winding a first electrode plate 131, a first separator 132, a second electrode plate 133, and a second separator 134 includes a flat region I and two bending regions II respectively connected to two ends of the flat region I. Two ends of the first adhesive layer 135a in a winding direction are both located at the bending region II, so that the first adhesive layer 135a has no effect on flatness of the flat region I, and the first adhesive layer 135a causes no problem of indentation and wrinkling of the electrode plates.

In some embodiments, two ends of the first adhesive layer 135a in the winding direction are both located at a same bending region II.

In some embodiments, as shown in FIG. 16, the first adhesive layer 135a may be entirely located at one of two bending regions II, so that the two ends of the first adhesive layer 135a in the winding direction are both located at the bending region II. FIG. 16 shows a schematic structural diagram of an electrode assembly 13 in which a first adhesive layer 135a does not pass through a flat region I and two ends of the first adhesive layer 135a in a winding direction are located at a same bending region II.

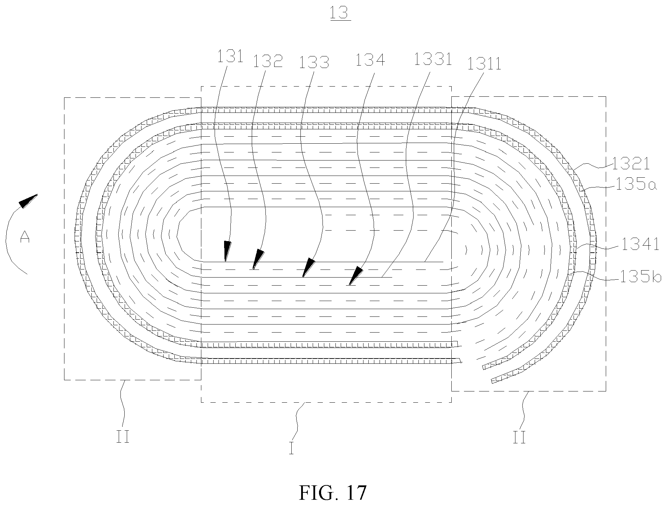

In some embodiments, as shown in FIG. 17, alternatively, applying of the first adhesive layer 135a may start from a bending region II and end at the bending region II after the first adhesive layer 135a passes through the flat region I an even number of times. For example, if the first adhesive layer 135a passes through the flat region I twice, four times, or six times, the two ends of the first adhesive layer 135a in the winding direction are both located at the same bending region II. FIG. 17 shows a schematic diagram of an electrode assembly 13 in which a first adhesive layer 135a passes through a flat region I twice and two ends of s first adhesive layer 135a in s winding direction are located at a same bending region II.

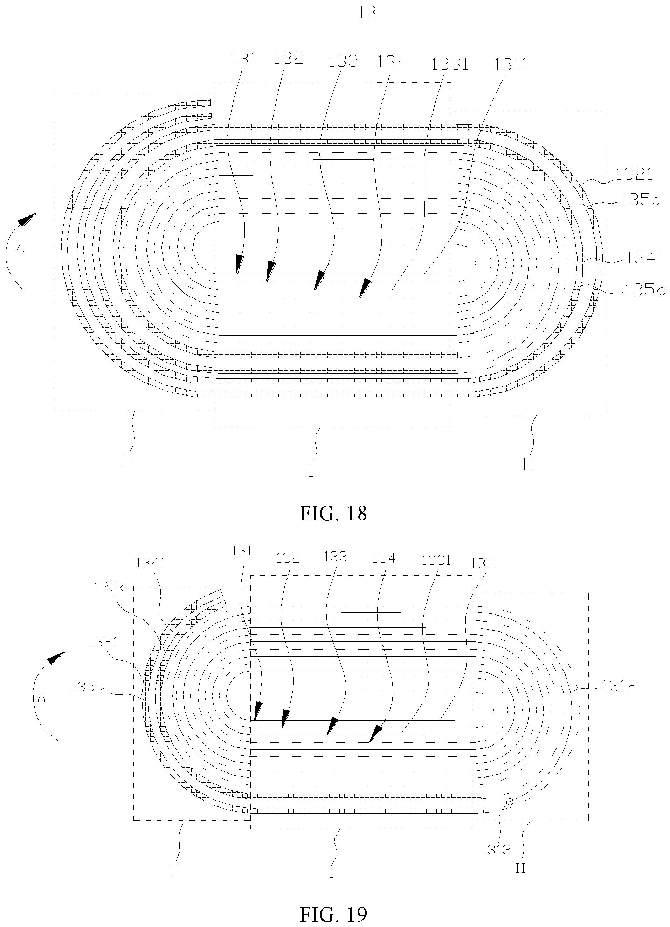

In some embodiments, as shown in FIG. 18 and FIG. 19, two ends of a first adhesive layer 135a in a winding direction are respectively located at two bending regions II. In this case, the first adhesive layer 135a passes through the flat region I at least once and the number of times of passing through a flat region I is an odd number. For example, the first adhesive layer 135a passes through the flat region once, three times, or five times, so that the first adhesive layer 135a has a sufficient length to ensure adhesive performance of a first tail section 1321, allowing the first tail section 1321 to be fixed more firmly. FIG. 18 shows a schematic structural diagram of an electrode assembly 13 in which a first adhesive layer 135a passes through a flat region I three times and the two ends of the first adhesive layer 135a in a winding direction are respectively located at two flat regions I. FIG. 19 shows an electrode assembly 13 in which a first adhesive layer 135a passes through a flat region I once and two ends of the first adhesive layer 135a in a winding direction are respectively located at two flat regions I.

In some embodiments, as shown in FIG. 19, both a finishing end of a first tail section 1321 and a finishing end of a second tail section 1341 are located at a bending region II, so that the finishing end of the first tail section 1321 and the finishing end of the second tail section 1341 do not cause unevenness in the flat region I of the electrode assembly 13, avoiding occurrence of indentation and wrinkling of a first electrode plate 131 in a flat region I caused by stress concentration during hot pressing or swelling.

In some embodiments, still referring to FIG. 19, an outermost-layer electrode plate of the electrode assembly 13 is the first electrode plate 131, the first electrode plate 131 is configured to be terminated at the bending region II, and the first tail section 1321 and the second tail section 1341 exceed a winding tail section (a first electrode plate tail section 1312) of the first electrode plate 131 and are terminated after passing through the flat region I at least once. The first electrode plate 131 is terminated at the bending region II, and the finishing end of the first electrode plate 131 does not cause unevenness in the flat region I of the electrode assembly 13, avoiding occurrence of indentation and wrinkling of the first electrode plate 131 in the flat region I caused by stress concentration during hot pressing or swelling. The first tail section 1321 and the second tail section 1341 exceeding the winding tail section of the first electrode plate 131 and terminated after passing through the flat region I at least once can ensure that the first tail section 1321 and the second tail section 1341 have sufficient binding force on the electrode assembly 13 to guarantee structure stability of the electrode assembly 13. In FIG. 19, a part of the first tail section 1321 and a part of the second tail section 1341 exceed the winding tail section (a first electrode plate tail section 1312) of the first electrode plate 131 are terminated at the bending region II after passing through the flat region I once.

In some embodiments, the part of the first tail section 1321 and the part of the second tail section 1341 that exceed the winding tail section (the first electrode plate tail section 1312) of the first electrode plate 131 are terminated at the bending region II after passing through the flat region I twice, three times, or more than three times.

In some embodiments, the electrode assembly 13 formed by winding the first electrode plate 131, a first separator 132, a second electrode plate 133, and a second separator 134 may be of a cylinder structure.

In some embodiments, the first electrode plate 131 is a negative electrode plate, and the second electrode plate 133 is a positive electrode plate. The outermost-layer electrode plate is a negative electrode plate, and the second tail section 1341 is located outward of the first tail section 1321. Generally, a width of the negative electrode plate is not less than a width of the positive electrode plate, and two sides of the negative electrode plate in a width direction exceed two sides of the positive electrode plate in the width direction or two sides of the negative electrode plate in the width direction are flush with two sides of the positive electrode plate in the width direction, so as to ensure that the negative electrode plate covers the positive electrode plate and reduce the possibility of lithium precipitation. A separator is configured to separate the positive electrode plate from the negative electrode plate to avoid an internal short circuit in the battery 100 caused by direct contact of the positive electrode plate. Therefore, a width of the separator should not be less than a width of the negative electrode plate. The separator is a flexible body with a small thickness. Therefore, when an adhesive layer is provided on a surface of the separator, two ends of the separator in a width direction are wound up toward the middle in the width direction, so that the separator is reduced in width, possibly resulting that the separator is less than the negative electrode plate in width and cannot play a role of separation between the positive electrode plate and the negative electrode plate.

Being flush means being located on a same plane, and two sides of the negative electrode plate in the width direction being flush with two sides of the positive electrode plate in the width direction means that the two sides of the negative electrode plate in the width direction and corresponding two sides of the positive electrode plate in the width direction are located on the same plane.

Based on this, in some embodiments, in the width direction of the first electrode plate 131, the two ends of the first adhesive layer 135a exceed the two ends of the first electrode plate 131 or the two ends of the first adhesive layer 135a are flush with the two ends of the first electrode plate 131. After the first adhesive layer 135a is applied on the first tail section 1321 of the first separator 132, a minimum width of the separator formed after two ends of the first separator 132 in the width direction are wound up is equal to a width of the first adhesive layer 135a. In the width direction of the first electrode plate 131, the two ends of the first adhesive layer 135a exceed the two ends of the first electrode plate 131 or the two ends of the first adhesive layer 135a are flush with the two ends of the first electrode plate 131, so that the width of the first separator 132 is not less than the width of the first electrode plate 131. In this way, an internal short circuit of the battery 100 due to the fact that the first separator 132 becomes smaller in width after being wound up at two sides in the width direction and cannot play a role of separation between the first electrode plate 131 and the second electrode plate 133 can be avoided.

In some embodiments, in the width direction of the first electrode plate 131, a part of the first adhesive layer 135a beyond the first electrode plate 131 is bonded to the second separator 134, so that a bonding area between the first tail section 1321 and the second separator 134 increases, further improving fixation stability of the first tail section 1321 and providing a more compact connection between the first tail section 1321 and the separator inward of the first tail section. The first adhesive layer 135a may exceed the first electrode plate 131 on two sides in the width direction. Alternatively, the first adhesive layer 135a may exceed the first electrode plate 131 on one side in the width direction, and is flush with the first electrode plate 131 on the other side of the first adhesive layer 135a in the width direction.

In some embodiments, only a part of the first adhesive layer 135a is bonded to the second separator 134. For example, in the width direction of the electrode plate 131, a part of the first adhesive layer 135a beyond the first electrode plate 131 is not bonded to the second separator 134, and the rest of the first adhesive layer 135a is bonded to the second separator 134.

The outermost-layer electrode plate of the electrode assembly 13 is the first electrode plate 131, and the winding tail section (the first electrode plate tail section 1312) of the first electrode plate 131 is in an unfixed free state. When the electrode assembly 13 swells, the winding tail section (the first electrode plate tail section 1312) of the first electrode plate 131 moves in the winding direction, such that the first electrode plate 131 is prone to wrinkle, and a distance between the first electrode plate 131 and the second electrode plate 133 inward of the first electrode plate 131 is excessively increased, leading to lithium precipitation. Therefore, in some embodiments, the winding tail section of the first electrode plate 131 is configured to be fixed to the first separator 132 or the second separator 134, so that lithium precipitation caused by excessive increase of the distance between the first electrode plate 131 and the second electrode plate 133 when the electrode assembly 13 swells can be avoided.

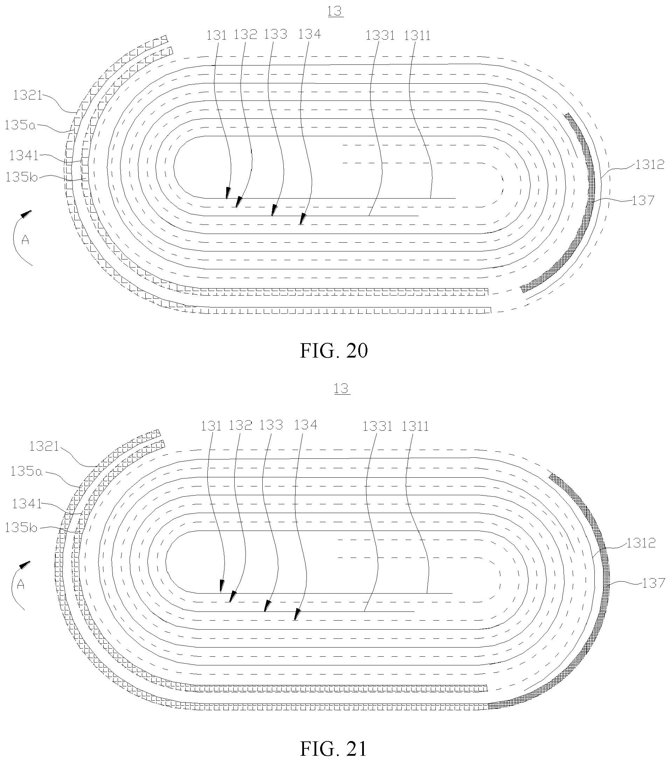

In some embodiments, as shown in FIG. 20, a third adhesive layer 137 is provided on an inner side of a winding tail section (a first electrode plate tail section 1312) of a first electrode plate 131, and the winding tail section of the first electrode plate 131 is configured to be bonded to a first separator 132 by using the third adhesive layer 137. A fastener for fixing the first electrode plate tail section 1312 is the third adhesive layer 137. No substrate is provided in the third adhesive layer 137. Implementation of bonding and fixing the winding tail section of the first electrode plate 131 by using the third adhesive layer 137 with a relatively small thickness can reduce the effect of the thickness of the fastener for fixing the first electrode plate tail section 1312 on overall size of the electrode assembly 13 and improve energy density of the battery cell 10.

The material and performance of the third adhesive layer 137 can refer to those of the first adhesive layer 135a, and details are not repeated herein.

The third adhesive layer 137 may be provided on an inner surface of the winding tail section (the first electrode plate tail section 1312) of the first electrode plate 131, or may be provided on a surface of a separator inward of the winding tail section (the first electrode plate tail section 1312) of the first electrode plate 131. FIG. 20 shows a schematic structural diagram of an electrode assembly 13 in which the third adhesive layer 137 is provided on a surface of a second separator 134 inward of the winding tail section (the first electrode plate tail section 1312) of the first electrode plate 131.

In some embodiments, as shown in FIG. 21, a third adhesive layer 137 is provided on an outer side of a winding tail section (a first electrode plate tail section 1312) of a first electrode plate 131, and the winding tail section (the first electrode plate tail section 1312) of the first electrode plate 131 is configured to be bonded to a first separator 132 by using the third adhesive layer 137. The third adhesive layer 137 may be provided on an outer surface of the winding tail section of the first electrode plate 131, or may be provided on a surface of a separator outward of the winding tail section (the first electrode plate tail section 1312) of the first electrode plate 131.

In some embodiments, as shown in FIG. 21, the third adhesive layer 137 may be a part extending from the first adhesive layer 135a. FIG. 21 shows an electrode assembly 13 in which the third adhesive layer 137 is provided outward of the winding tail section of the first electrode plate 131 and the third adhesive layer 137 connects to a first adhesive layer 135a.

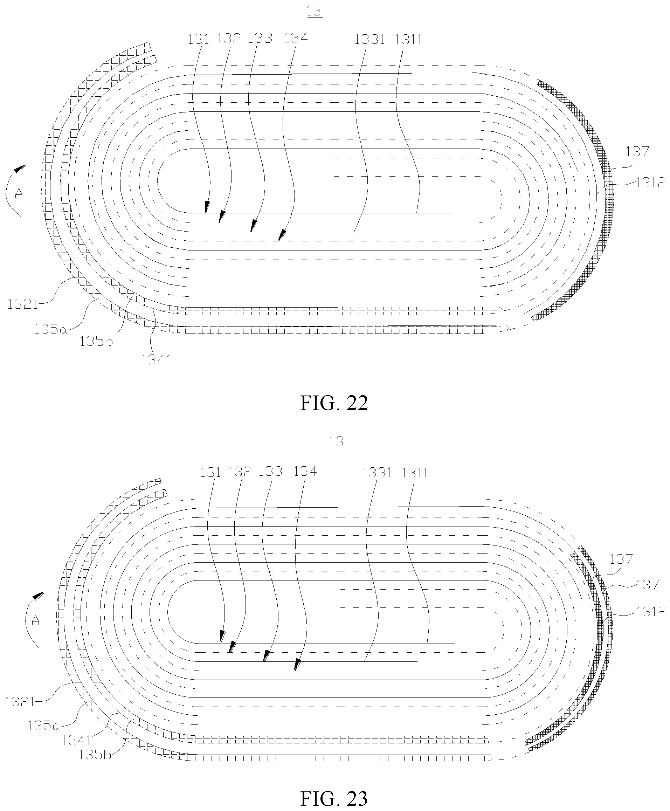

In some embodiments, as shown in FIG. 22, a third adhesive layer 137 may be disconnected from a first adhesive layer 135a. FIG. 22 shows a schematic structural diagram of an electrode assembly 13 in which the third adhesive layer 137 is provided on an outer side of a winding tail section (a first electrode plate tail section 1312) of a first electrode plate 131 and the third adhesive layer 137 is disconnected from the first adhesive layer 135a.

In some embodiments, as shown in FIG. 23, an inner side and an outer side of a winding tail section (a first electrode plate tail section 1312) of a first electrode plate 131 are each provided with a third adhesive layer 137, and the winding tail section of the first electrode plate 131 (the first electrode plate tail section 1312) is configured to be fixed to both a first separator 132 and a second separator 134. In this structure, the third adhesive layer 137 provided on the outer side of the winding tail section of the first electrode plate 131 may be a part extending from the first adhesive layer 135a, or the third adhesive layer 137 may be provided separately and connected to or disconnected from a first adhesive layer 135a.

In some embodiments, the third adhesive layer 137 may be formed after a glue applied on the inner side and/or the outer side of the first electrode plate tail section 1312 solidifies. The adhesive layer has relatively high bonding performance, and a winding tail section of the first electrode plate 131 is fixed firmly by using the third adhesive layer 137. Implementation of bonding and fixing the winding tail section of the first electrode plate 131 by using the third adhesive layer 137 with a relatively small thickness can reduce the effect of the thickness of the fastener for fixing the first electrode plate tail section 1312 on overall size of the electrode assembly 13 and improve energy density of the battery cell 10.

In some embodiments, the third adhesive layer 137 is formed after a glue applied on the inner side and/or the outer side of the first electrode plate tail section 1312 solidifies. Compared with a substrate of an adhesive tape, the third adhesive layer 137 has a larger porosity, providing better infiltration of an electrolyte, so that lithium ions shuttle between the first electrode plate 131 and the second electrode plate 133 with low impedance and short time, helping improve rate performance, discharge capacity, and service life of the battery cell 10.

In some embodiments, the winding tail section of the first electrode plate 131 may alternatively be fixed to a surface of the first separator 132 or a surface of the second separator 134 by using an adhesive tape 136.

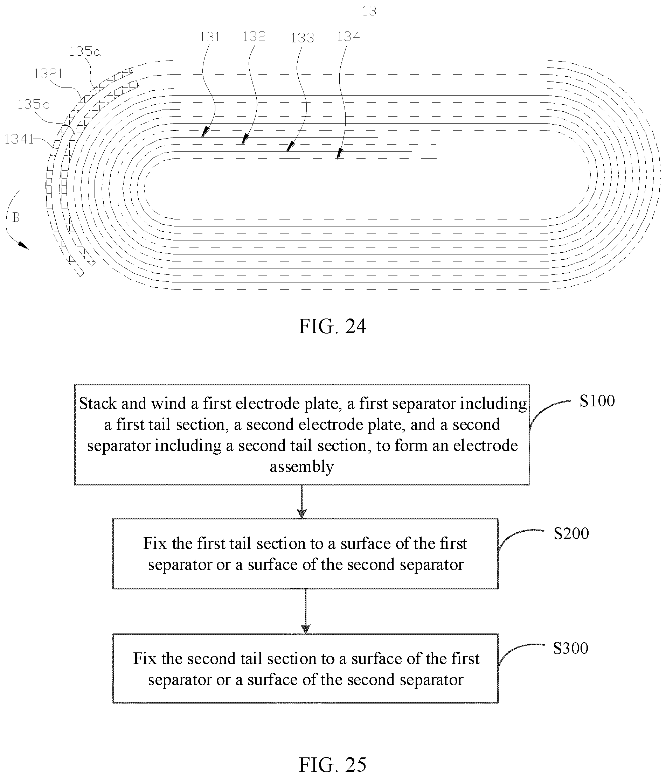

In some embodiments, the first electrode plate 131 may alternatively be a positive electrode plate, and the second electrode plate 133 is a negative electrode plate, so that a winding direction should be opposite, as shown in FIG. 24 (the winding direction is a counterclockwise direction B in FIG. 24). In this way, an inner side of a wound innermost-layer first electrode plate 131 (positive electrode plate) can be covered by the second electrode plate 133 (negative electrode plate), so that lithium ions of the positive electrode plate can be inserted into the negative electrode plate.

According to a second aspect, an embodiment of this application further provides a manufacturing method of battery cell 10, as shown in FIG. 25. FIG. 25 shows a flowchart of a manufacturing method of battery cell 10. The manufacturing method of battery cell 10 includes the following steps.

S100. Stack and wind a first electrode plate 131, a first separator 132 including a first tail section 1321, a second electrode plate 133, and a second separator 134 including a second tail section 1341, to form an electrode assembly 13.

S200. Fix the first tail section 1321 to a surface of the first separator 132 or a surface of the second separator 134.

S300. Fix the second tail section 1341 to a surface of the first separator 132 or a surface of the second separator 134.

It should be noted that in assembling the battery cell 10 based on the manufacturing method of battery cell 10 provided in the foregoing embodiment, an order in which steps S100, S200, and S300 are performed is not limited. For example, step S200 may be performed first, that is, a second adhesive layer 135b is applied on the second tail section 1341, and then step S 100 is performed.

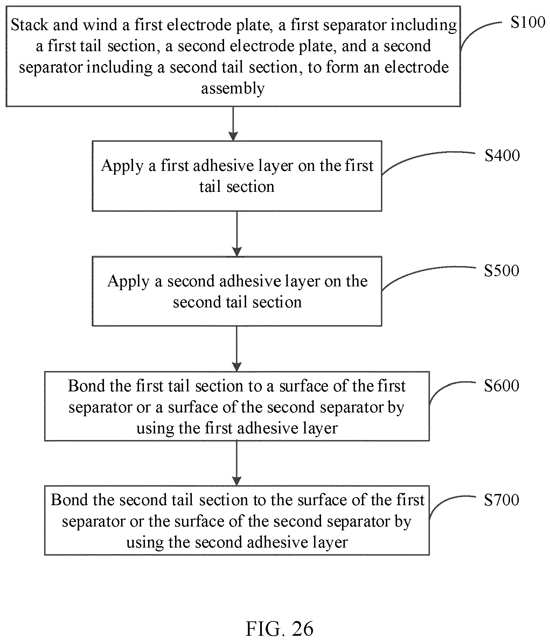

In some embodiment, as shown in FIG. 26, the manufacturing method of battery cell further includes:
S400. Apply a first adhesive layer 135a on the first tail section 1321a;
S500. Apply a second adhesive layer 135b on the second tail section 1341;
S600. Bond the first tail section 1321 to a surface of the first separator 132 or a surface of the second separator 134 by using the first adhesive layer 135a; and
S700. Bond the second tail section 1341 to the surface of the first separator 132 or the surface of the second separator 134 by using the second adhesive layer 135b.

It should be noted that in assembling the battery cell 10 based on the foregoing manufacturing method of battery cell 10, an order in which steps S400, S500, S600, and S700 are performed is not limited. For example, steps S400 and S600 may be performed first, that is, the first adhesive layer 135a is applied on the first tail section 1321, and then steps S500 and S700 are performed.

In step S400, the first adhesive layer 135a may be successively or non-successively applied. In a process of successively applying an adhesive, the adhesive applied is inconsistent in thickness at all places. This may cause creases and wrinkles on an electrode plate when a place with a larger thickness of the adhesive applied is hot-pressed or the electrode assembly 13 is heated and swells. Therefore, when being applied, the first adhesive layer 135a is non-successively applied. The first adhesive layer 135a applied non-successively includes a plurality of first adhesive portions 135a1 spaced apart. There is a gap between the first adhesive portions 135a1. When being hot-pressed, a first adhesive portion 135a1 with a larger thickness is pressed before a first adhesive portion 135a1 with a smaller thickness, so that the heated and pressed first adhesive portion 135a1 with a larger thickness expands toward the gap between the first adhesive portions 135a1, and accordingly a size in the thickness direction is reduced, making all the first adhesive portions 135a1 almost the same, thereby reducing creases and wrinkles on the electrode plate caused by the uneven thickness of the first adhesive layer 135a when the electrode assembly 13 is heated and swells.

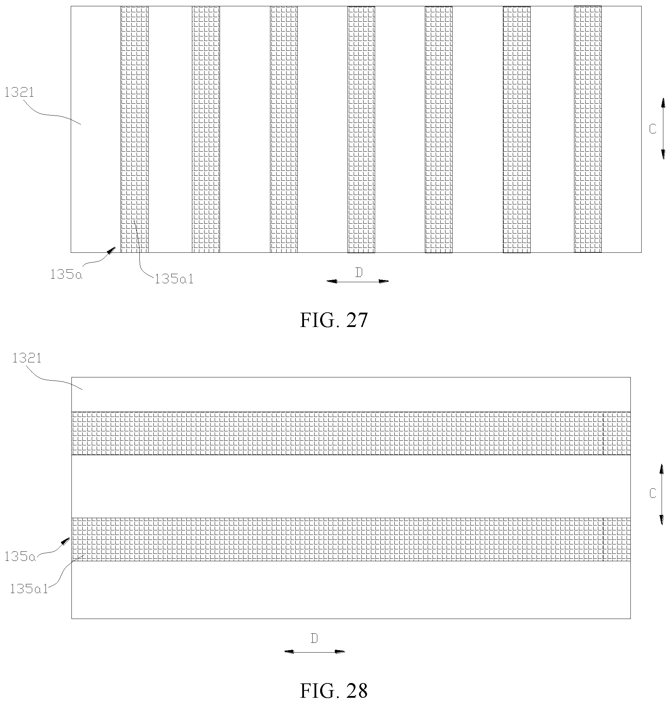

The first adhesive layer 135a may be non-successively applied in a plurality of manners. In some embodiments, as shown in FIG. 27, a plurality of first adhesive portions 135a1 are applied at intervals in a length direction D of a first tail section 1321, and in a width direction C of the first tail section 1321, two sides of each first adhesive portion 135a1 in the width direction C are flush with two sides of the first tail section 1321 in the width direction C. In some embodiments, it may be possible that only one of two sides of each first adhesive portion 135a1 in the width direction C is flush with the first tail section 1321.

In some embodiments, the plurality of first adhesive portions 135a1 are applied at intervals in the width direction C of the first tail section 1321. As shown in FIG. 28, in a width direction C of the first tail section 1321, two first adhesive portions 135a1 are applied at an interval, and two sides of each first adhesive portion 135a1 in the width direction C are not flush with two sides of the first tail section 1321 in the width direction C.

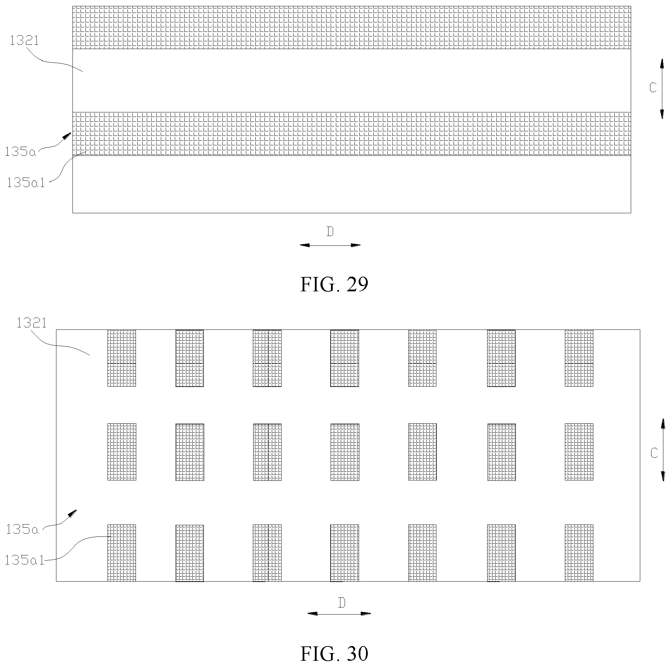

In some embodiments, as shown in FIG. 29, a plurality of first adhesive portions 135a1 are applied at intervals in a width direction C of a first tail section 1321, where one side of one of two first adhesive portions 135a1 in two ends in the width direction C is flush with the first tail section 1321, and one side of the other one of the two first adhesive portions 135a1 in two ends in the width direction C is flush with the first tail section 1321.

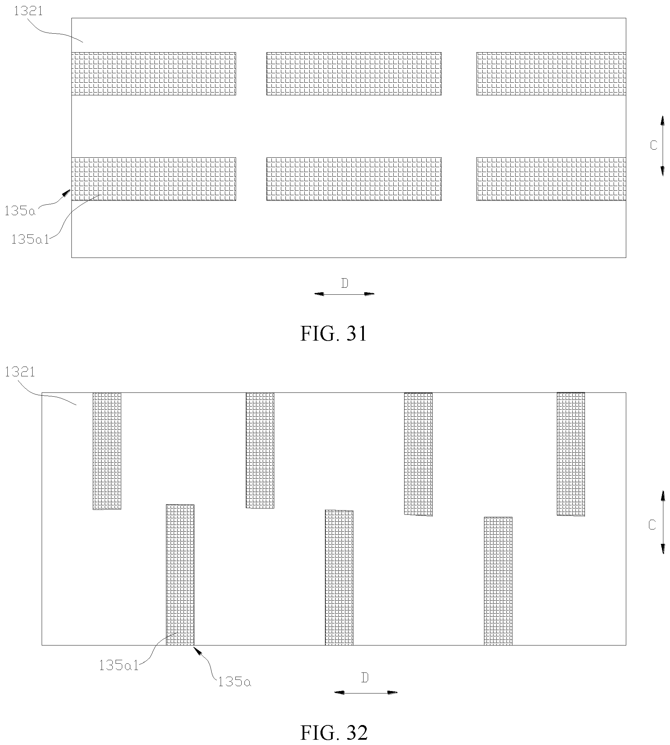

In some embodiments, the plurality of first adhesive portions 135a1 are arranged in a rectangular array. FIG. 30 shows that a plurality of first adhesive portions 135a1 are arranged in a rectangular array and two sides of the first adhesive layer 135a in a width direction C are flush with a first tail section 1321. Alternatively, any side of the first adhesive layer 135a in the width direction C may be flush with the first tail section 1321. FIG. 31 shows that a plurality of first adhesive portions 135a1 are arranged in a rectangular array and two sides of the first adhesive layer 135a in a width direction C are not flush with a first tail section 1321. In some embodiments, as shown in FIG. 32, a plurality of first adhesive portions 135a1 are in a toothed arrangement.

It should be noted that when a first adhesive layer 135a is non-successively applied, two sides of the first adhesive layer 135a in a width direction C exceeding two sides of a first electrode plate 131 in the width direction C means that two positions farthest away from each other in the width direction C among the plurality of first adhesive portions 135a1 are beyond two sides of a first electrode plate 131 in the width direction C. Two sides of the first adhesive layer 135a in the width direction C being flush with two sides of the first electrode plate 131 in the width direction C means that two positions farthest away from each other in the width direction C among the plurality of first adhesive portions 135a1 are flush with the two sides of the first electrode plate 131 in the width direction C.

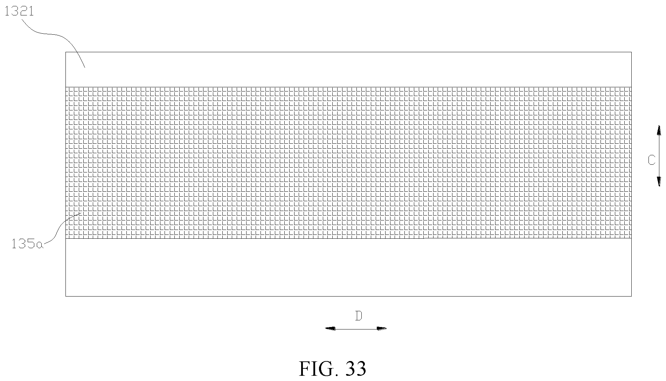

In some embodiments, as shown in FIG. 33, a first adhesive layer 135a is successively applied, and thickness of the first adhesive layer 135a is 1 µm to 3 µm. Certainly, according to actual requirements, the first adhesive layer 135a may have another thickness. The thickness of the first adhesive layer 135a is 1 µm to 3 µm and may be a thickness before or after hot pressing. In some embodiments, the first adhesive layer 135a is non-successively applied, thickness of the first adhesive layer 135a is the same as that of each first adhesive portion 135a1, and the thickness of each first adhesive portion 135a1 is 1 µm to 3 µm. Certainly, according to actual requirements, the first adhesive portion 135a1 may have another thickness. The thickness of the first adhesive portion 135a1 is 1 µm to 3 µm and may be a thickness before or after hot pressing.

In step S500, a manner of applying the second adhesive layer 135b and a structural form of the second adhesive layer 135b applied can refer to those of the first adhesive layer 135a, and details are not repeated herein.

For a relevant structure of the battery cell 10 manufactured by the manufacturing method of battery cell 10 described above, reference may be made to the battery cell 10 provided in the foregoing embodiments.

It should be noted that, without conflict, the embodiments and features in the embodiments in this application may be combined with each other.

The foregoing embodiments are merely preferred embodiments, and are not intended to limit this application. A person skilled in the art may modify or change this application. Any modification, equivalent replacement, and improvement made without departing from the spirit and principle of this application shall fall within the protection scope of this application.

## Claims

1. A battery cell, comprising an electrode assembly, wherein:
the electrode assembly comprises a first electrode plate, a first separator, a second electrode plate, and a second separator;
the electrode assembly is formed by stacking and winding the first electrode plate, the first separator, the second electrode plate, and the second separator; and
the first separator comprises a first tail section and the second separator comprises a second tail section, wherein the first tail section is configured to be fixed to a surface of the first separator or a surface of the second separator; and the second tail section is configured to be fixed to a surface of the first separator or a surface of the second separator.

2. The battery cell according to claim 1, wherein the second tail section is located outward of the first tail section, a first adhesive layer is provided on an inner side of the first tail section, and the first tail section is configured to be bonded to the second separator by using the first adhesive layer.

3. The battery cell according to claim 2, wherein the electrode assembly comprises a flat region and two bending regions respectively connected to two ends of the flat region; and
two ends of the first adhesive layer in a winding direction are both located at the bending region.

4. The battery cell according to claim 3, wherein the two ends of the first adhesive layer in the winding direction are respectively located at two bending regions.

5. The battery cell according to any one of claims 2 to 4, wherein the first electrode plate is a negative electrode plate and the second electrode plate is a positive electrode plate; and
in a width direction of the first electrode plate, the two ends of the first adhesive layer exceed two ends of the first electrode plate or the two ends of the first adhesive layer are flush with the two ends of the first electrode plate.

6. The battery cell according to claim 5, wherein in the width direction of the first electrode plate, the two ends of the first adhesive layer exceed the two ends of the first electrode plate, and part of the first adhesive layer beyond the first electrode plate is bonded to the second separator.

7. The battery cell according to any one of claims 1 to 6, wherein the second tail section is located outward of the first tail section, a second adhesive layer is provided on an inner side of the second tail section, and the second tail section is configured to be bonded to the first separator by using the second adhesive layer.

8. The battery cell according to any one of claims 1 to 7, wherein an outermost-layer electrode plate of the electrode assembly is the first electrode plate, and a winding tail section of the first electrode plate is configured to be fixed to the first separator or the second separator.

9. The battery cell according to claim 8, wherein a third adhesive layer is provided on an inner side of the winding tail section of the first electrode plate, and the winding tail section of the first electrode plate is configured to be bonded to the first separator by using the third adhesive layer; and/or
a third adhesive layer is provided on an outer side of the winding tail section of the first electrode plate, and the winding tail section of the first electrode plate is configured to be bonded to the second separator by using the third adhesive layer.

10. The battery cell according to any one of claims 1 to 9, wherein the electrode assembly comprises a flat region and two bending regions respectively connected to two ends of the flat region, and both a finishing end of the first tail section and a finishing end of the second tail section are located at the bending region.

11. The battery cell according to claim 10, wherein an outermost-layer electrode plate of the electrode assembly is the first electrode plate, the first electrode plate is configured to be terminated at the bending region, and the first tail section and the second tail section exceed the winding tail section of the first electrode plate and are terminated after passing through the flat region at least once.

12. A battery, comprising the battery cell according to any one of claims 1 to 11.

13. An electric device, comprising the battery cell according to any one of claims 1 to 11.

14. A manufacturing method of battery cell, comprising:
stacking and winding a first electrode plate, a first separator comprising a first tail section, a second electrode plate, and a second separator comprising a second tail section, to form an electrode assembly;
fixing the first tail section to a surface of the first separator or a surface of the second separator; and
fixing the second tail section to a surface of the first separator or a surface of the second separator.

15. The manufacturing method of battery cell according to claim 14, wherein the manufacturing method further comprises:
applying a first adhesive layer on the first tail section;
applying a second adhesive layer on the second tail section;
bonding the first tail section to the surface of the first separator or the surface of the second separator by using the first adhesive layer; and
bonding the second tail section to the surface of the first separator or the surface of the second separator by using the second adhesive layer.
